# EUROPEAN PATENT APPLICATION

(11) **EP 4 202 321 A1**
(43) Date of publication of application: **28.06.2023**
(21) Application number: 21860871.9
(22) Date of filing: 11.05.2021
(51) Int. Cl.: F25B 49/02, G01N 17/04, F25B 47/00

(54) **REFRIGERATION CYCLE DEVICE AND REFRIGERATION CYCLE SYSTEM**

(30) Priority: 24.08.2020 JP 2020140922
(71) Applicant: Panasonic Intellectual Property Management Co., Ltd., Osaka-shi, Osaka 540-6207 (JP)
(72) Inventor: NAKAJIMA, Takahito, Osaka-shi, Osaka 540-6207 (JP)
(74) Representative: Eisenführ Speiser
(86) International application number: PCT/JP2021/017932
(87) International publication number: WO 2022/044439

(57) **Abstract**

A refrigeration cycle device according to the present disclosure includes a first heat exchanger, a compressor, a second heat exchanger, and an expansion mechanism, the refrigeration cycle device including: a refrigerant pipe that connects the first heat exchanger, the compressor, the second heat exchanger, and the expansion mechanism, and through which a refrigerant is circulated, and that contains copper as a main component; an atmospheric corrosion monitor (ACM) sensor that is disposed on at least one of an outer surface of the refrigerant pipe and around the refrigerant pipe, and that detects a corrosion current; and a processing unit that determines corrosion of the refrigerant pipe based on a change in the corrosion current detected by the ACM sensor.

## Description

### TECHNICAL FIELD

The present disclosure relates to a refrigeration cycle device and a refrigeration cycle system.

### BACKGROUND ART

As an example of such a refrigeration cycle device, Patent Document 1 discloses an absorption refrigerator capable of detecting a local corrosion.

Patent Document 1 discloses an absorption refrigerator provided with a corrosion detecting unit that detects corrosion of a constituent material of an inner wall of the refrigerator. The corrosion detecting unit in the refrigerator described in Patent Document 1 includes a pair of electrodes that are disposed in a manner immersed in an absorbent inside the device, a measuring unit that measures a current flowing between the electrodes, and a warning unit that issues a warning when the measured current exceeds a predetermined level.

### PRIOR ART DOCUMENT

### PATENT DOCUMENT

Patent Document 1: JP 2008-286441 A

### SUMMARY OF THE INVENTION

### PROBLEMS TO BE SOLVED BY THE INVENTION

However, the refrigerator described in Patent Document 1 still has room for improvement with regards to the accuracy of corrosion detection.

Therefore, an object of the present disclosure is to solve the problem described above, and to provide a refrigeration cycle device and a refrigeration cycle system capable of improving the corrosion detection accuracy.

### MEANS FOR SOLVING THE PROBLEMS

A refrigeration cycle device according to one aspect of the present disclosure is a refrigeration cycle device including a first heat exchanger, a compressor, a second heat exchanger, and an expansion mechanism, the refrigeration cycle device including: a refrigerant pipe that connects the first heat exchanger, the compressor, the second heat exchanger, and the expansion mechanism, and through which a refrigerant is circulated, and that contains copper as a main component; an atmospheric corrosion monitor (ACM) sensor that is disposed on at least one of an outer surface of the refrigerant pipe and around the refrigerant pipe, and that detects corrosion current; and a processing unit that determines corrosion of the refrigerant pipe based on a change in the corrosion current detected by the ACM sensor.

A refrigeration cycle system according to one aspect of the present disclosure includes: a refrigeration cycle device that includes a first heat exchanger, a compressor, a second heat exchanger, and an expansion mechanism; a processing device that communicates with the refrigeration cycle device via a network, wherein the refrigeration cycle device includes a refrigerant pipe that connects the first heat exchanger, the compressor, the second heat exchanger, and the expansion mechanism, through which a refrigerant is circulated, and that contains copper as a main component, an atmospheric corrosion monitor (ACM) sensor that is disposed on at least one of an outer surface of the refrigerant pipe and around the refrigerant pipe, and that detects corrosion current, a storage that stores therein information of the corrosion current detected by the ACM sensor, and a first communicator that transmits information of the corrosion current stored in the storage via the network, and the processing device includes a second communicator that receives the information of the corrosion current via the network, and a processing unit that determines corrosion of the refrigerant pipe based on a change in the corrosion current.

### EFFECTS OF THE INVENTION

According to the present disclosure, the corrosion detection accuracy can be further improved.

### BRIEF DESCRIPTION OF THE DRAWINGS

FIG. 1 is a schematic diagram of an example of a refrigeration cycle device according to a first embodiment of the present disclosure.
FIG. 2 is a schematic diagram of an ACM sensor according to the first embodiment.
FIG. 3 is a sectional view of the ACM sensor according to the first embodiment, with a film of water attached thereto.
FIG. 4A is a graph illustrating a relationship between a corrosion current detected by the ACM sensor according to the first embodiment and elapsed time.
FIG. 4B is an enlarged view of a part of the corrosion current indicated in FIG. 4A.
FIG. 5 is a schematic diagram of a first heat exchanger according to a second embodiment of the present disclosure.
FIG. 6 is a sectional view of a bent portion with the ACM sensor according to the second embodiment attached thereto.
FIG. 7 is a sectional view of a bent portion with an ACM sensor according to a first modification of the second embodiment attached thereto.
FIG. 8 is a block diagram of a refrigeration cycle device according to a third embodiment of the present disclosure.
FIG. 9 is a block diagram of a refrigeration cycle system according to a fourth embodiment of the present disclosure.

### MODES FOR CARRYING OUT THE INVENTION

### (Background to present disclosure)

In a refrigeration cycle device, a refrigerant pipe through which the refrigerant is circulated is made of a material containing copper as a main component, for example. In general, copper is a metal that is highly corrosionresistant.

However, in the refrigerant pipe containing copper as a main component, a local corrosion might take place quickly under certain conditions, and corrosion might penetrate the refrigerant pipe. For example, when formaldehyde contained in an adhesive, which is used as a material in buildings, becomes oxidized around a refrigerant pipe, the refrigerant pipe becomes more susceptible to ant-nest corrosions, which result in cavitation of the refrigerant pipe. In addition, when there is some ammonia around a part of the refrigerant pipe under a bending stress, the refrigerant pipe becomes more vulnerable to stress corrosion cracking. To take some measure against such corrosions before the refrigerant pipe becomes penetrated, there is a demand for improving the accuracy of corrosion detections in a refrigeration cycle device.

Therefore, the inventors have studied a configuration of a refrigeration cycle device for detecting corrosion of a refrigerant pipe using an ACM sensor. As a fruit of intensive studies on changes in corrosion currents detected by the ACM sensor in such a configuration, the inventors found out that corrosion of a refrigerant pipe containing copper as a main component can be detected accurately based on changes in the corrosion current.

Based on these novel findings, the inventors have arrived at the following disclosure.

A refrigeration cycle device according to a first aspect of the present disclosure is a refrigeration cycle device including a first heat exchanger, a compressor, a second heat exchanger, and an expansion mechanism, the refrigeration cycle device including: a refrigerant pipe that connects the first heat exchanger, the compressor, the second heat exchanger, and the expansion mechanism, and through which a refrigerant is circulated, and that contains copper as a main component; an atmospheric corrosion monitor (ACM) sensor that is disposed on at least one of an outer surface of the refrigerant pipe and around the refrigerant pipe, and that detects corrosion current; and a processing unit that determines corrosion of the refrigerant pipe based on a change in the corrosion current detected by the ACM sensor.

With this configuration, it is possible to improve the detection accuracy of corrosion of the refrigerant pipe.

In a refrigeration cycle device according to a second aspect of the present disclosure, the ACM sensor may be disposed on the refrigerant pipe disposed in at least one of the first heat exchanger and the second heat exchanger.

With such a configuration, it is possible to improve the detection accuracy of corrosion of the refrigerant pipe disposed in at least one of the first heat exchanger and the second heat exchanger.

In a refrigeration cycle device according to a third aspect of the present disclosure, the refrigerant pipe disposed in at least one of the first heat exchanger and the second heat exchanger may have a bent portion, and the ACM sensor may be disposed on the bent portion.

With such a configuration, it is possible to improve the detection accuracy of corrosion of the bent portion of the refrigerant pipe disposed in at least one of the first heat exchanger and the second heat exchanger.

In the refrigeration cycle device according to a fourth aspect of the present disclosure, the ACM sensor may include: a base material that is conductive; an insulating layer that is laminated on the base material and that is made of an electrically insulating material; and a cathode electrode that is laminated on the insulating layer and that has a surface potential nobler than a surface potential of the base material, wherein the main component of the base material and the main component of the refrigerant pipe may be the same.

With such a configuration, because the base material and the refrigerant pipe are made of the same constituent material, it is possible to make a further improvement in the detection accuracy of corrosion of the refrigerant pipe.

In a refrigeration cycle device according to a fifth aspect of the present disclosure, the base material and the refrigerant pipe may have substantially the same thickness.

With this configuration, it is possible to improve the detection accuracy of stress corrosion cracking in the refrigerant pipe.

In a refrigeration cycle device according to a sixth aspect of the present disclosure, a part of the refrigerant pipe may be used as the base material.

With such a configuration, it is possible to detect the actual corrosion of the refrigerant pipe, and therefore, it is possible to make a further improvement in the detection accuracy of corrosion of the refrigerant pipe.

A refrigeration cycle device according to a seventh aspect of the present disclosure may further include a display device that displays a determination result of corrosion of the refrigerant pipe, the corrosion being determined by the processing unit.

With such a configuration, the result of determining the corrosion can be displayed to the user, and it is possible to encourage the user to take measures for the corrosion.

In a refrigeration cycle device according to an eighth aspect of the present disclosure, the processing unit may be configured to detect a rise interval in which a time derivative of the corrosion current rises at a threshold or higher, and a fall interval in which the corrosion current falls, the fall interval immediately following the rise interval, and to determine the corrosion of the refrigerant pipe when the rise interval is shorter than 1 second and the fall interval is 1 second or longer, and is shorter than 30 seconds.

With such a configuration, the processing unit can determine the corrosion of the refrigerant pipe based on a change in the corrosion current.

In a refrigeration cycle device according to a ninth aspect of the present disclosure, the threshold may be 5 µA/s.

With such a configuration, the processing unit can determine the corrosion of the refrigerant pipe when a time derivative of the corrosion current rises at a time derivative of 5 µA/s or higher during the rise interval. In this manner, it is possible to make a further improvement in the detection accuracy of corrosion of the refrigerant pipe containing copper as a main component.

A refrigeration cycle device according to a tenth aspect of the present disclosure may further include a four-way valve that changes a direction in which the refrigerant flows in the refrigerant pipe.

With such a configuration, it is possible to improve the detection accuracy of the corrosion of a refrigerant pipe in an air conditioner.

A refrigeration cycle system according to eleventh aspect of the present disclosure includes: a refrigeration cycle device that includes a first heat exchanger, a compressor, a second heat exchanger, and an expansion mechanism; a processing device that communicates with the refrigeration cycle device via a network, wherein the refrigeration cycle device includes a refrigerant pipe that connects the first heat exchanger, the compressor, the second heat exchanger, and the expansion mechanism, through which a refrigerant is circulated, and that contains copper as a main component, an atmospheric corrosion monitor (ACM) sensor that is disposed on at least one of an outer surface of the refrigerant pipe and around the refrigerant pipe, and that detects corrosion current, a storage that stores therein information of the corrosion current detected by the ACM sensor, and a first communicator that transmits information of the corrosion current stored in the storage via the network, and the processing device includes a second communicator that receives the information of the corrosion current via the network, and a processing unit that determines corrosion of the refrigerant pipe based on a change in the corrosion current.

With such a configuration, it is possible to improve the detection accuracy of corrosion of the refrigerant pipe in the refrigeration cycle device, and to cause the refrigeration cycle device to transmit the information of the corrosion current detected by the ACM sensor to another device.

### (First embodiment)

A refrigeration cycle device according to a first embodiment of the present disclosure will now be explained. In the following description, an air conditioner during a cooling operation will be described as an example of the refrigeration cycle device according to the first embodiment, but the refrigeration cycle device is not limited to the air conditioner.

### [Overall configuration]

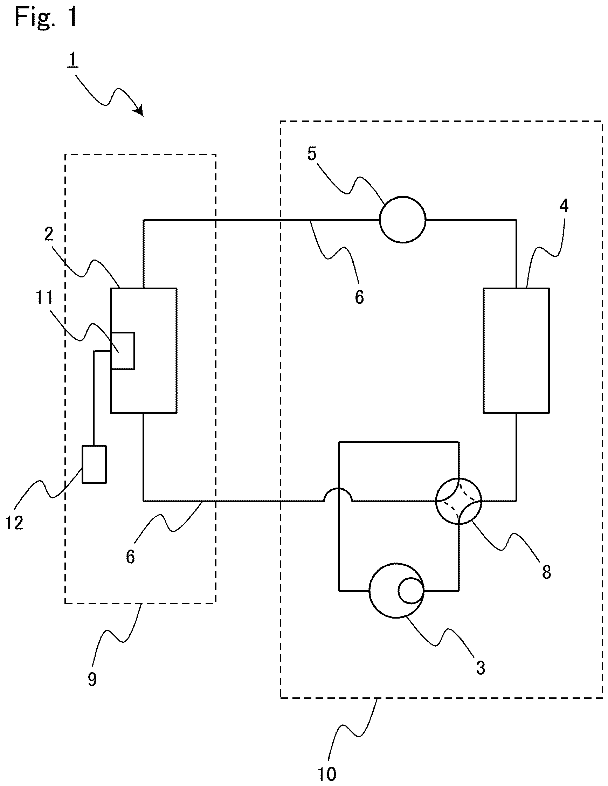

FIG. 1 is a schematic diagram illustrating an example of the refrigeration cycle device 1 according to the first embodiment of the present disclosure. As illustrated in FIG. 1, the refrigeration cycle device 1 includes a first heat exchanger 2, a compressor 3, a second heat exchanger 4, an expansion mechanism 5, a refrigerant pipe 6, a four-way valve 8, an atmospheric corrosion monitor (ACM) sensor 11, and a processing unit 12.

In the refrigeration cycle device 1, the first heat exchanger 2 and a part of the refrigerant pipe 6 are included in an indoor unit 9, and are installed indoors. The compressor 3, the second heat exchanger 4, the expansion mechanism 5, the four-way valve 8, and a part of the refrigerant pipe 6 are included an outdoor unit 10, and are installed outdoors.

### <First heat exchanger>

The first heat exchanger 2 includes fins, a refrigerant pipe 6 disposed inside the first heat exchanger 2, and an indoor fan. The fins include a plurality of thin metal plates, and are disposed in such a manner that surfaces of the respective metal plates extend in parallel with one another. The fins are used in exchanging heat with the air. The refrigerant pipe 6 is disposed orthogonally to the surfaces of the fins, is disposed in a bent manner so as to penetrate through the fins repeatedly, and causes the refrigerant flowing into the first heat exchanger 2 to evaporate. The indoor fan blows the air having its temperature adjusted by the first heat exchanger 2 to the indoor side.

### <Compressor>

The compressor 3 is connected, by the refrigerant pipe 6, to the first heat exchanger 2, and to the four-way valve 8. The compressor 3 is used in compressing the refrigerant incoming from the refrigerant pipe 6 in the first heat exchanger 2.

### <Second heat exchanger>

The second heat exchanger 4 includes fins, the refrigerant pipe 6 disposed inside second heat exchanger 4, and an outdoor fan. The fins have the same structure as the fins included in the first heat exchanger 2. The refrigerant pipe 6 is disposed orthogonally to the surfaces of the fins, is disposed in a bent manner so as to penetrate through the fins repeatedly, and condenses the refrigerant flowing into the second heat exchanger 4. The outdoor fan blows the air having its temperature adjusted by the second heat exchanger 4 to the outdoor side.

### <Expansion mechanism>

The expansion mechanism 5 is connected, by the refrigerant pipe 6, to the first heat exchanger 2, and to the second heat exchanger 4. The expansion mechanism 5 is used in expanding the refrigerant incoming from the refrigerant pipe 6 in the second heat exchanger 4. The expansion mechanism 5 is an expansion valve, for example.

### <Refrigerant pipe>

The refrigerant pipe 6 is disposed to connect the first heat exchanger 2, the compressor 3, the four-way valve 8, the second heat exchanger 4, and the expansion mechanism 5. The refrigerant pipe 6 makes up a part of the first heat exchanger 2 and the second heat exchanger 4. The refrigerant pipe 6 is disposed so as to connect the first heat exchanger 2, the compressor 3, the four-way valve 8, the second heat exchanger 4, and the expansion mechanism 5 in the order listed herein, for example.

The refrigerant pipe 6 has a channel through which a refrigerant flows, inside the refrigerant pipe 6, and allows the refrigerant to circulate. The refrigerant pipe 6 has a hollow cylindrical shape, for example.

A main component of the refrigerant pipe 6 is copper. The material making up the refrigerant pipe 6 contains copper by 80 wt% or more. Preferably, the material making up the refrigerant pipe 6 contains copper by 95 wt% or more. More preferably, the material making up the refrigerant pipe 6 contains copper by 99 wt% or more. The material making up the refrigerant pipe 6 may contain phosphorus by 0.015 wt% or more and 0.40 wt% or less. Examples of the material of which the refrigerant pipe 6 is made include oxygen-free copper C1020, phosphorus-deoxidized copper C1220, and high-phosphorus-deoxidized copper C1260. Furthermore, by adding phosphorus to the copper of the refrigerant pipe 6, it is possible to improve the corrosion resistance. For example, if the refrigerant pipe 6 is made of high phosphorus deoxidized copper C1260, the resistance against ant-nest corrosions, which result in cavitation of the refrigerant pipe 6, is improved.

### <Four-way valve>

The four-way valve 8 is connected, by the refrigerant pipe 6, to the compressor 3, to the first heat exchanger 2, and to the second heat exchanger 4. During the cooling operation, the four-way valve 8 sends the refrigerant coming out of the compressor 3 to the second heat exchanger 4. At the same time, the four-way valve 8 changes the direction in which the refrigerant flows, depending on the operation mode (cooling operation, heating operation) of the refrigeration cycle device 1.

### <ACM sensor>

The ACM sensor 11 reproduces corrosion of the refrigerant pipe 6, and detects a corrosion current from the reproduced corrosion. The ACM sensor 11 may measure the corrosion current quantitatively, on the ongoing basis, from when the use of the refrigeration cycle device 1 has begun. For example, the ACM sensor 11 measures the corrosion current at an interval of 0.1 second.

The ACM sensor 11 is disposed on an outer surface of the refrigerant pipe 6. In the first embodiment, the ACM sensor 11 is disposed on the outer surface of the refrigerant pipe 6 in the first heat exchanger 2.

The ACM sensor 11 is attached to the refrigerant pipe 6 in order to match the corrosion environment of the ACM sensor 11 to that of the refrigerant pipe 6. In other words, the ACM sensor 11 is attached to a part of the refrigerant pipe 6 where corrosion is to be detected. To attach the ACM sensor 11 to the refrigerant pipe 6, the ACM sensor 11 may be deformed to fit the shape of the outer surface of the refrigerant pipe 6. In other words, the ACM sensor 11 may be flexible. For example, the ACM sensor 11 may be attached to the refrigerant pipe 6 using an adhesive layer provided on the rear surface of the ACM sensor 11, using an adhesive, by brazing, soldering, or spot welding. The ACM sensor 11 may also be attached to the refrigerant pipe 6 by inserting the ACM sensor 11 into a case attached to the refrigerant pipe 6.

The dimensions of the ACM sensor 11 may be designed based on where and how the ACM sensor 11 is installed.

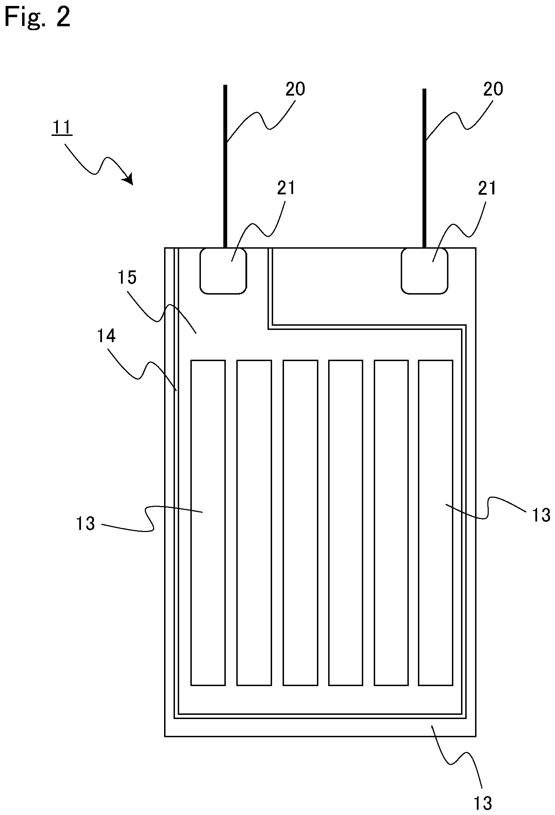

FIG. 2 is a schematic diagram of the ACM sensor 11 according to the first embodiment. As illustrated in FIG. 2, the ACM sensor 11 includes a base material 13, an insulating layer 14, a cathode electrode 15, conductive wires 20, and insulating protection layers 21.

The base material 13 is made of a conductive material. For example, the base material 13 is made of the same material as the material of which the refrigerant pipe 6 is made. In the first embodiment, the base material 13 contains copper as a main component, in the same manner as the refrigerant pipe 6. Therefore, it is possible to reproduce the corrosion of the refrigerant pipe 6 using the base material 13. As a result, the corrosion of the refrigerant pipe 6 can be determined accurately, based on the corrosion of the base material 13 included in the ACM sensor 11.

The base material 13 has a plate-like shape. By making the base material 13 thin, it becomes possible to deform the ACM sensor 11 easily so that the shape of the ACM sensor 11 is matched to the shape of the installation site of the ACM sensor 11. The thickness of the base material 13 may be substantially the same as that of the refrigerant pipe 6. For example, the thickness of the base material 13 is 0.8 times or more and 1.2 times or less the thickness of the refrigerant pipe 6. Preferably, the thickness of the base material 13 is 0.9 times or more and 1.1 times or less than that of the refrigerant pipe 6.

The insulating layer 14 has a plate-like shape. The insulating layer 14 is laminated on one surface of the base material 13. On the other hand, even after the insulating layer 14 is laminated, the base material 13 remains exposed from the surface.

The insulating layer 14 is an electrically insulating material. For example, the insulating layer 14 is made of a resin.

The cathode electrode 15 is laminated on a surface of the insulating layer 14, the surface being on the opposite side of the base material 13.

The cathode electrode 15 is made of a conductive material having a surface potential nobler than that of the base material 13. When the surface potential of the cathode electrode 15 is nobler than that of the base material 13, the base material 13 becomes preferentially corroded. Therefore, the corrosion of the refrigerant pipe 6 can be detected using the ACM sensor 11. The cathode electrode 15 is made of silver or carbon, for example, both of which have a surface potential nobler than that of the copper forming the base material 13.

The ACM sensor 11 includes conductive wires 20 between the base material 13 and the processing unit 12, and between the cathode electrode 15 and the processing unit 12, and the conductive wires 20 electrically connect therebetween. The conductive wire 20 is made of an electrically conductive material. For example, the conductive wire 20 is made of copper.

The insulating protection layers 21 are disposed at connections between the conductive wire 20 and the base material 13, and between the conductive wire 20 and the cathode electrode 15 to protect the connections. The insulating protection layer 21 is made of an electrically insulating material. The insulating protection layer 21 is made of a resin, for example.

### <Processing unit>

Elements of the processing unit 12 may include, for example, a memory (not illustrated) storing therein a program for causing the elements to function, and a processing circuit (not illustrated) corresponding to a processor, such as a central processing unit (CPU). The processor may implement the function of these elements by executing a program.

The processing unit 12 determines corrosion of the refrigerant pipe 6 based on a change in the corrosion current. More specifically, the processing unit 12 determines corrosion of the refrigerant pipe 6 by determining whether a corrosion current detected by the ACM sensor 11 includes a spike signal. The processing unit 12 determines that corrosion of the refrigerant pipe 6 has occurred when the corrosion current includes a spike signal, for example.

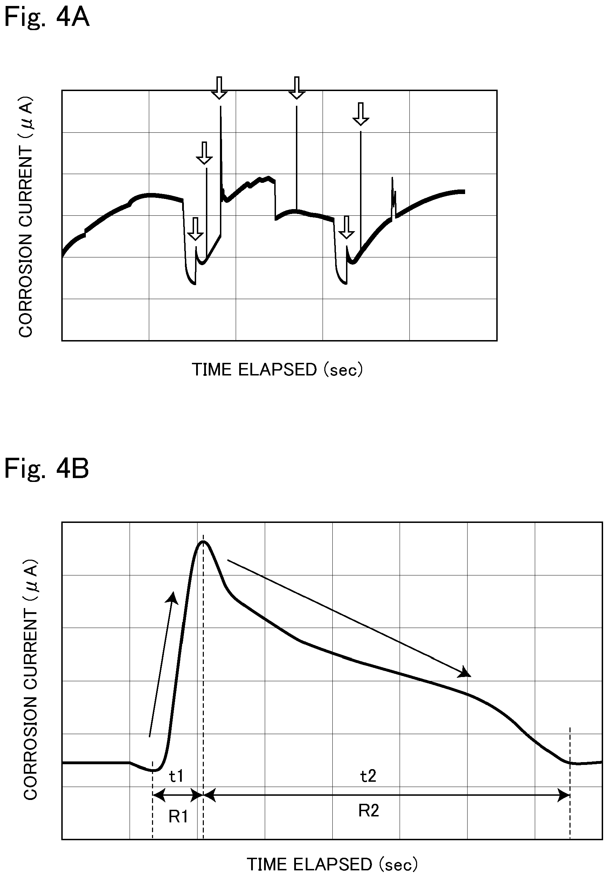

The spike signal is an abrupt change in the corrosion current. A spike signal includes a rise interval R1 and a fall interval R2 illustrated in FIG. 4B, which will be described later. The rise interval R1 is an interval in which the time derivative of the corrosion current increases at a certain threshold or higher. On the other hand, the fall interval R2 is an interval that occurs immediately subsequently to the rise interval R1, and in which the corrosion current falls. Because the current falls, the time derivative of the fall interval R2 becomes less than 0 µA/s, that is, negative. When the rise interval R1, in which the time derivative equals to the threshold or higher, continues for time t1, and the fall interval R2, in which the corrosion current falls, continues for time t2, the processing unit 12 may determine that the corrosion current includes a spike signal, and determine the corrosion of the refrigerant pipe 6. For example, the time t1 is set shorter than 1 second, and the time t2 is set to 1 second or longer and shorter than 30 seconds. The threshold of the time derivative of the rise interval R1 is 5 µA/s, for example.

The processing unit 12 is electrically connected to the ACM sensor 11. The processing unit 12 may be disposed near the ACM sensor 11.

### [Operation]

An example of an operation of the refrigeration cycle device 1 will now be explained in detail.

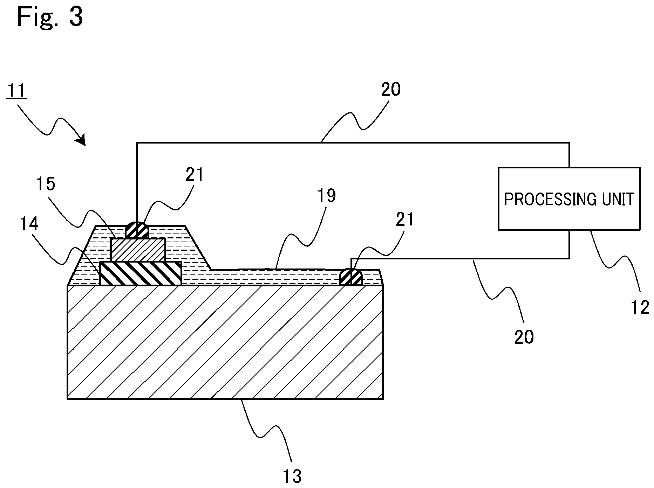

FIG. 3 is a sectional view of the ACM sensor 11. In FIG. 3, the ACM sensor 11 is connected to the processing unit 12 via the conductive wires 20. On the surface of the ACM sensor 11, a water film 19 is formed.

The water film 19 is a continuous film of water, and is in contact with a part of the base material 13 and a part of the cathode electrode 15. On ACM sensor 11, a plurality of water films 19 may be formed. The water film 19 is formed when the temperature of the base material 13 is lower than the ambient temperature, and moisture condenses on the ACM sensor 11, for example. A water film 19 is also formed when the humidity around base material 13 is high.

Because water is electrically conductive, when the water film 19 is formed, the base material 13 becomes electrically connected to the cathode electrode 15. Because there is a potential difference between the base material 13 and the cathode electrode 15, corrosion current flows therebetween. The corrosion current flows from the base material 13 to the cathode electrode 15, and electrons move from the cathode electrode 15 to the base material 13. The corrosion current then flows from the cathode electrode 15 to the processing unit 12.

The ACM sensor 11 detects this corrosion current in the base material 13. When the base material 13 becomes corroded by the water film 19, a change occurs in the corrosion current detected by the ACM sensor 11. The processing unit 12 determines the corrosion of the refrigerant pipe 6 based on the change in the corrosion current.

In the first embodiment, the base material 13 of the ACM sensor 11 and the refrigerant pipe 6 are made of the same material. The ACM sensor 11 is attached to the outer surface of the refrigerant pipe 6 of the first heat exchanger 2. Therefore, it is possible to reproduce the corrosion of the refrigerant pipe 6 using the base material 13. Therefore, the processing unit 12 can make an assumption that corrosion of the refrigerant pipe 6 has occurred based on a change in the corrosion current generated as a result of the corrosion of the base material 13 in the ACM sensor 11.

A change in the current caused by corrosion will now be explained in detail.

To begin with, local corrosions of copper that is used as a material of the base material 13 and the refrigerant pipe 6 will be explained. Examples of a local corrosion of copper include an ant-nest corrosion and stress corrosion cracking. In an ant-nest corrosion, intricately branched microcavities are formed inside copper, e.g. inside a wall of the refrigerant pipe 6. An ant-nest corrosion is likely to occur when carboxylic acid is present near the copper. For example, carboxylic acid is generated when formaldehyde contained in an adhesive used as a material of a building becomes oxidized. In stress corrosion cracking, cracking begins from a copper surface, e.g., from the outer surface of the refrigerant pipe 6. Stress cracking corrosion occurs when ammonia is present near the copper being subjected to a bending stress. Ammonia is generated from urine of a pet, for example.

When a normal corrosion due to humidity or salt damage occurs in the base material 13 that contains copper as a main component, the copper making up the base material 13 becomes oxidized and emits electrons. As a result of the corrosion of the base material 13, the corrosion current flowing through the base material 13 increases. On the other hand, when the base material 13 containing copper as a main component becomes locally corroded, by contrast, the copper making up the base material 13 becomes oxidized and emits a large amount of electrons within a short time period. As a result of a local corrosion of the base material 13, the corrosion current flowing through the base material 13 increases. Such an increase in the corrosion current due to a local corrosion is a more abrupt increase, compared with a normal corrosion caused by humidity or salt damage, and forms a spike signal. Therefore, when a local corrosion occurs, the ACM sensor 11 detects a spike signal in the corrosion current. In other words, a spike signal indicates that a local corrosion of copper has occurred, and can be used in detecting corrosion of copper.

FIG. 4A is a graph illustrating a relationship between the corrosion current detected by the ACM sensor 11 and the elapsed time. FIG. 4B is an enlarged view of a part of the corrosion current indicated in FIG. 4A. In FIG. 4A, an arrow points to a spike signal indicating an occurrence of the corrosion of the base material 13 containing copper as a main component. FIG. 4B illustrates an enlarged view of one of the spike signals indicated in FIG. 4A.

As illustrated in FIG. 4B, in the corrosion of copper, the spike signal exhibits a rise interval R1 and a fall interval R2 that occurs immediately subsequently to the rise interval R1. As described above, the processing unit 12 determines the corrosion of the refrigerant pipe 6 based on the rise interval R1 and the fall interval R2 in the corrosion current.

The determination of corrosion by the processing unit 12 is a determination as to whether the refrigerant pipe 6 is corroded. For example, when a spike signal is generated, it is determined that corrosion has occurred, and when no spike signal is generated, it is determined that there is no corrosion. Conditions of the corrosion, e.g., the size of the corroded area, the rate of the corrosion, and the lifetime of the refrigerant pipe 6 may be determined based on other information related to the spike signals detected by the ACM sensor 11. For example, the condition of the corrosion is determined using the maximum current, the number of the spike signals or the frequency of the spike signals.

### [Advantageous effects]

The refrigeration cycle device 1 according to the first embodiment has following advantageous effects.

The refrigeration cycle device includes the first heat exchanger 2, the compressor 3, the second heat exchanger 4, and the expansion mechanism 5. The refrigeration cycle device 1 also includes the refrigerant pipe 6, the ACM sensor 11, and the processing unit 12. The refrigerant pipe 6 connects the first heat exchanger 2, the compressor 3, the second heat exchanger 4, and the expansion mechanism 5, is configured to circulate the refrigerant, and contains copper as a main component. The ACM sensor 11 is disposed on the outer surface of the refrigerant pipe 6 and detects corrosion current. The processing unit 12 determines corrosion of the refrigerant pipe 6 based on a change in the corrosion current detected by the ACM sensor 11.

With this configuration, it is possible to improve the corrosion detection accuracy. Specifically, because the ACM sensor 11 is used to detect the corrosion current, and the corrosion of the refrigerant pipe 6 is determined based on a change in the detected corrosion current, it is possible to improve the corrosion detection accuracy.

By disposing the ACM sensor 11 on the outer surface of the refrigerant pipe 6, the detection accuracy of the corrosion of the refrigerant pipe 6 can be further improved. Specifically, by disposing the ACM sensor 11 on the outer surface of the refrigerant pipe 6, it is possible to match the corrosion environment of the ACM sensor 11 to that of the refrigerant pipe 6. In this manner, the temperature of the ACM sensor 11 is synchronized with the temperature of the refrigerant pipe 6, for example. In such a case, by synchronizing the temperatures, condensation occurs on the ACM sensor 11 as well as on the refrigerant pipe 6 by the same degree. By reproducing the condensation on the refrigerant pipe 6, corrosion of the refrigerant pipe 6 can be reproduced using the ACM sensor 11, so that the corrosion detection accuracy can be improved.

The synchronization of the temperatures is achieved by thermal conduction between the base material 13 of the ACM sensor 11 and the refrigerant pipe 6, for example. The temperature synchronization is easily achieved because the main component of the refrigerant pipe 6 is copper and copper is highly thermally conductive.

The ACM sensor 11 is disposed on the refrigerant pipe 6 included in the first heat exchanger 2.

With such a configuration, it is possible to make a further improvement in the detection accuracy of the corrosion of the refrigerant pipe 6. Specifically, in refrigeration cycle device 1, because the temperature of the refrigerant pipe 6 in the first heat exchanger 2 is more likely to become different from the ambient temperature, condensation, and therefore corrosion, is more likely to occur in the refrigerant pipe 6 in the first heat exchanger 2. By disposing the ACM sensor 11 in the refrigerant pipe 6 that is more likely to corrode, corrosion can be detected more reliably. Furthermore, by disposing the ACM sensor 11 at a location where corrosion is likely to take place in the refrigerant pipe 6 in the refrigeration cycle device 1, the beginning of the corrosion of the refrigerant pipe 6 can be detected. Accordingly, it is possible to detect a failure of the refrigeration cycle device 1 due to a corrosion of the refrigerant pipe 6, in advance.

The ACM sensor 11 includes the base material 13, the insulating layer 14, and the cathode electrode 15. The base material 13 is conductive, and the main component of the base material 13 is the same as the main component of the refrigerant pipe 6. The insulating layer 14 is laminated on the base material 13, and is an electrically insulating material. The cathode electrode 15 is laminated on the insulating layer 14, and has a surface potential nobler than that of the base material 13.

With such a configuration, corrosion current flows between base material 13 and cathode electrode 15, and corrosion of refrigerant pipe 6 can be determined based on a change in the corrosion current.

In addition, because the main component of the base material 13 is the same as that of the refrigerant pipe 6, the detection accuracy of the corrosion of the refrigerant pipe 6 can be further improved. Specifically, the main component of the base material 13 and that of refrigerant pipe 6 are copper. Therefore, the base material 13 exhibits the same material characteristics as those of the refrigerant pipe 6. Thus, the corrosion of the refrigerant pipe 6 can be reproduced in the base material 13, and the corrosion of the refrigerant pipe 6 can be determined based on a change in the corrosion current resultant of corrosion of the base material 13. As a result, it is possible to make a further improvement in the detection accuracy of the corrosion of the refrigerant pipe 6. Furthermore, because the base material 13 and the refrigerant pipe 6 has the same material characteristics, their water repellency is the same, and the water film 19 formed on their surface have the same area, thickness, and the like, for example. Therefore, the corrosion detection accuracy can be further improved.

Because the main component of the base material 13 is copper, the base material 13 is highly electrically conductive, and the base material 13 has a low electrical resistance. Therefore, a weak corrosion current flowing through the base material 13 and a change in the corrosion current can be easily detected.

The thickness of the base material 13 is substantially the same as that of the refrigerant pipe 6.

With such a configuration, it is possible to make a further improvement in the detection accuracy of the corrosion of the refrigerant pipe 6. Specifically, because the base material 13 has substantially the same thickness as the refrigerant pipe 6, the temperature, and condensation, and stress in the refrigerant pipe 6 can be better reproduced in the base material 13. Therefore, the corrosion of the refrigerant pipe 6 can be reproduced using the base material 13, and the corrosion detection accuracy can be further improved.

The processing unit 12 detects the rise interval R1 and the fall interval R2 in the corrosion current. In the rise interval R1, the time derivative of the corrosion current increases at the threshold or higher. The fall interval R2 follows immediately subsequently to the rise interval R1, and the corrosion current decreases. When the rise interval R1 is shorter than 1 second and the fall interval R2 is 1 second or longer and shorter than 30 seconds, the processing unit 12 determines the corrosion of the refrigerant pipe 6.

With such a configuration, the processing unit 12 can determine the corrosion of the refrigerant pipe 6 the main component of which is copper, based on a change in the corrosion current.

The first threshold is 5 µA/s.

With such a configuration, when the time derivative of the corrosion current in the rise interval R1 rises at 5 µA/s or higher, the processing unit 12 can determine the corrosion of the refrigerant pipe 6 containing copper as a main component. In this manner, it is possible to make a further improvement in the detection accuracy of the corrosion of the refrigerant pipe 6 containing copper as a main component.

The refrigeration cycle device 1 further includes the four-way valve 8 that changes the direction in which the refrigerant flows, in the refrigerant pipe 6.

With such a configuration, it is possible to improve the accuracy of a corrosion detection in an air conditioner, such as the refrigeration cycle device 1 according to the first embodiment, during the cooling operation.

Explained in the first embodiment is an example of the refrigeration cycle device 1 as an air conditioner during the cooling operation, but the present disclosure is not limited thereto. For example, the refrigeration cycle device 1 may be an air conditioner during a heating operation. The refrigeration cycle device 1 may also be a refrigeration device such as a refrigerator.

Explained in the first embodiment is an example in which the refrigerant pipe 6 is disposed in a manner connecting the first heat exchanger 2, the compressor 3, the four-way valve 8, the second heat exchanger 4, and the expansion mechanism 5, but the refrigerant pipe 6 may connect other elements such as an accumulator and a valve.

Explained in the first embodiment is an example in which the ACM sensor 11 is disposed on the outer surface of the refrigerant pipe 6 in the first heat exchanger 2, but the present disclosure is not limited thereto. The ACM sensor 11 may be disposed in at least one of the first heat exchanger 2 and the second heat exchanger 4. For example, the ACM sensor 11 may be disposed on the outer surface of the refrigerant pipe 6 in the second heat exchanger 4. Alternatively, the ACM sensors 11 may be disposed on the refrigerant pipe 6 in both of the first heat exchanger 2 and the second heat exchanger 4, respectively.

Alternatively, the ACM sensor 11 may be disposed in another part of the refrigerant pipe 6.

Explained in the first embodiment is an example in which the refrigeration cycle device 1 includes one ACM sensor 11, but the present disclosure is not limited thereto. The refrigeration cycle device 1 may include one or more ACM sensors 11.

Explained in the first embodiment is an example in which the ACM sensor 11 is disposed on the outer surface of the refrigerant pipe 6 in the refrigeration cycle device 1, but the present disclosure is not limited thereto. The ACM sensor 11 may be disposed at least one of on the outer surface of the refrigerant pipe 6 and around the refrigerant pipe 6. Being "disposed around the refrigerant pipe 6" means that the ACM sensor 11 is disposed on the refrigerant pipe 6 indirectly with some component interposed therebetween. For example, the ACM sensor 11 may be disposed on a fin of the first heat exchanger 2 where the refrigerant pipe 6 is connected. Alternatively, the ACM sensor 11 may be disposed on the outer surface of a dummy pipe through which no refrigerant passes. The temperatures are synchronized by disposing the dummy pipe near the refrigerant pipe 6. By disposing the ACM sensor 11 in an installation place where the temperature is lower than the temperature of the ambient atmosphere so that moisture is more likely to condense, or in a place being subjected to a stress load, it is possible to further improve the corrosion detection accuracy.

Explained in the first embodiment is an example in which the main component making up the base material 13 is copper, but the present disclosure is not limited thereto. The material of which the base material 13 is made may be any material that corrodes more preferentially than the cathode electrode 15. Furthermore, the base material 13 may be made of any material capable of reproducing the corrosion of the refrigerant pipe 6.

### (Second embodiment)

A refrigeration cycle device according to a second embodiment of the present disclosure will now be explained. In the second embodiment, difference with respect to the first embodiment will be mainly explained. In the second embodiment, the same or equivalent elements as those according to the first embodiment will be explained by assigning the same reference numerals thereto. In the second embodiment, descriptions that are redundant with those in the first embodiment will be omitted.

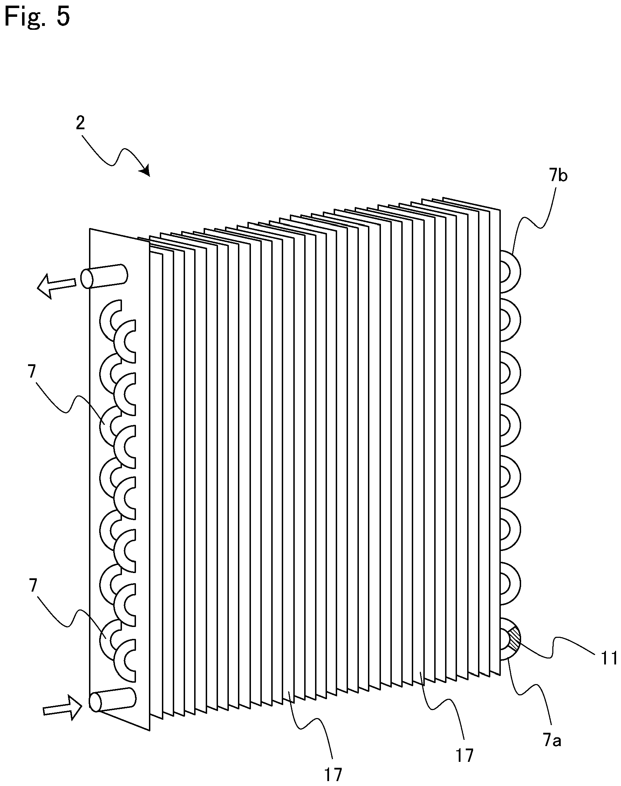

FIG. 5 is a schematic diagram of a first heat exchanger 2 according to the second embodiment of the present disclosure.

The second embodiment is different from the first embodiment in that the refrigerant pipe 6 installed in the first heat exchanger 2 has a bent portion 7, and the ACM sensor 11 is disposed on the bent portion 7.

In the second embodiment, the refrigeration cycle device 1 is the same as that according to the first embodiment, unless otherwise specified.

As illustrated in FIG. 5, in the first heat exchanger 2, a plurality of fins 17 are arranged at intervals therebetween. In the first heat exchanger 2, the refrigerant pipe 6 is disposed in a manner penetrating the fins 17. The refrigerant pipe 6 is bent and has a bent portion 7. The arrows in FIG. 5 indicate a direction in which the refrigerant flows during a cooling operation of the refrigeration cycle device 1.

The bent portion 7 of the refrigerant pipe 6 protrudes from the fins 17 on a side surface of the first heat exchanger 2, and is curved. In other words, the bent portion 7 is subjected to a bending stress. The bent portion 7 is curved in a U shape, for example. In the second embodiment, the refrigerant pipe 6 of the first heat exchanger 2 has a plurality of bent portions 7.

During the cooling operation of the refrigeration cycle device 1, in the refrigerant pipe 6 of the first heat exchanger 2, the temperature of the refrigerant is lower in a bent portion 7a on an incoming side, than in a bent portion 7b on an outgoing side of the refrigerant. Therefore, the relative humidity of the bent portion 7a is higher than that of the bent portion 7b, and is therefore more likely to corrode. Accordingly, in the second embodiment, the ACM sensor 11 is disposed on the bent portion 7a on the incoming side of the refrigerant in the first heat exchanger 2.

The ACM sensor 11 is deformed in a manner following the shape of the bent portion 7 and attached to the bent portion 7.

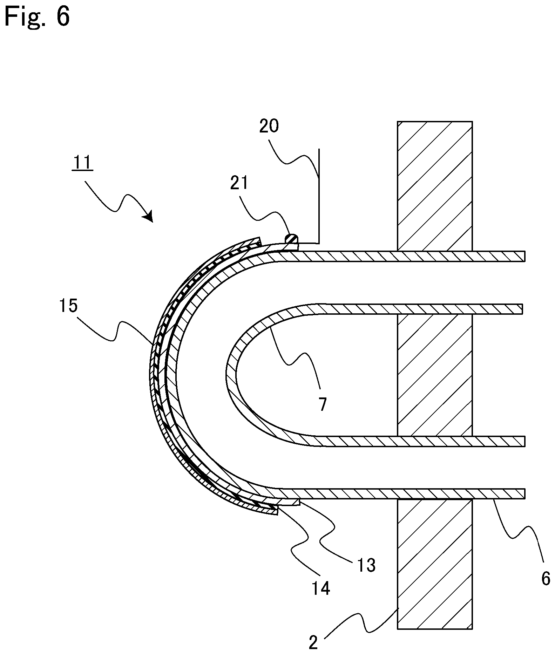

FIG. 6 is a sectional view of a bent portion with the ACM sensor 11 according to the second embodiment attached thereto. As illustrated in FIG. 6, the ACM sensor 11 is attached so as to be in close contact with the outer surface of the bent portion 7. In other words, the ACM sensor 11 is deformed in a manner following the outer shape of the bent portion 7. Therefore, the ACM sensor 11 is also subjected to the bending stress, in the same manner as the bent portion 7. The ACM sensor 11 can be attached to the bent portion 7 by brazing, soldering, spot welding, or the like. It is also possible to attach the ACM sensor 11 to the refrigerant pipe 6 by inserting into a case attached to the bent portion 7.

### [Advantageous effects]

The refrigerant pipe 6 installed in the first heat exchanger 2 has the bent portion 7, and the ACM sensor 11 is disposed on the bent portion 7.

With this configuration, it is possible to improve the detection accuracy of stress corrosion cracking of the refrigerant pipe 6. Specifically, because the base material 13 is disposed in a manner following the bent portion 7 of the refrigerant pipe 6, the bent shape of the bent portion 7 of the refrigerant pipe 6 can be reproduced with the base material 13. Furthermore, by reproducing the main component and the thickness of the refrigerant pipe 6 using the base material 13, the conditions of the bending stress in the bent portion 7 of the refrigerant pipe 6 can be reproduced in the base material 13. By reproducing the stress condition on the bent portion 7 of the refrigerant pipe 6, stress corrosion cracking of the refrigerant pipe 6 can be reproduced using the base material 13, and the detection accuracy of the stress corrosion cracking can be improved.

Explained in the second embodiment is an example in which the ACM sensor 11 is disposed on the bent portion 7 of the refrigerant pipe 6 in the first heat exchanger 2, but the present disclosure is not limited thereto. The refrigerant pipe 6 installed in at least one of the first heat exchanger 2 and the second heat exchanger 4 may have the bent portion 7, and the ACM sensor 11 may be disposed on the bent portion 7. For example, the ACM sensor 11 may be disposed on the bent portion 7 of the refrigerant pipe 6 in the second heat exchanger 4. Alternatively, the ACM sensors 11 may be disposed on the bent portions 7 of the refrigerant pipe 6 in both of the first heat exchanger 2 and the second heat exchanger 4, respectively.

Explained in the second embodiment is an example in which one ACM sensor 11 is disposed on the bent portion 7a that is one of the bent portions 7, but the present disclosure is not limited thereto. For example, a plurality of ACM sensors 11 may be disposed on the respective bent portions 7.

Explained in the second embodiment is an example in which the bent portion 7 where the ACM sensor 11 is disposed is the bent portion 7a on the incoming side of the refrigerant, but the present disclosure is not limited thereto. The ACM sensor 11 may also be disposed at the bent portion 7b on the outgoing side of the refrigerant. Alternatively, the ACM sensors 11 may be disposed on a bent portion 7 other than those of the refrigerant pipe 6 in the first heat exchanger 2 and the second heat exchanger 4.

Explained in the second embodiment is an example in which the ACM sensor 11 is attached to the bent portion 7, but the present disclosure is not limited thereto. For example, as in a first modification, which is explained below, a part of the refrigerant pipe 6 may be used as the base material 13.

### (First modification)

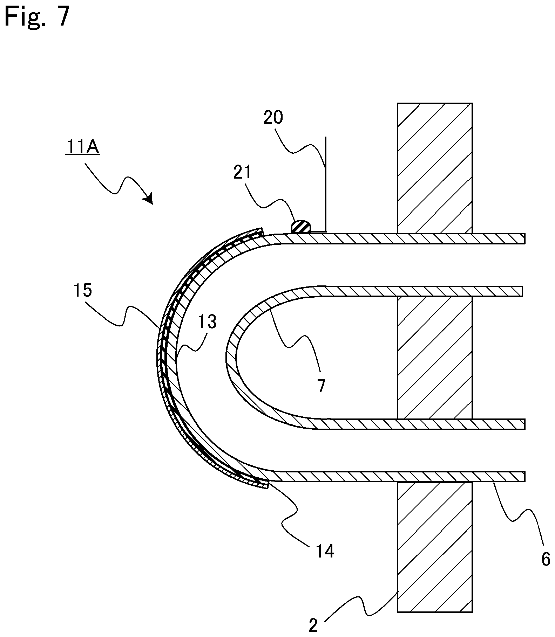

FIG. 7 is a sectional view of an ACM sensor 11A according to a modification of the second embodiment. As illustrated in FIG. 7, a part of the bent portion 7 of the refrigerant pipe 6 is used as the base material 13 of the ACM sensor 11A. The insulating layer 14 of the ACM sensor 11A is attached in a manner following the outer surface of the bent portion 7. The cathode electrode 15 is laminated on a surface of the insulating layer 14, on the opposite side of the bent portion 7. In the first modification, the other configurations of the ACM sensor 11A are the same as those of the ACM sensor 11 according to the second embodiment. An example of a method by which such an ACM sensor 11A is formed includes a method of directly printing the insulating layer 14 on the bent portion 7.

With such a configuration, it is possible to detect the actual corrosion current in the refrigerant pipe 6 directly, so that the corrosion detection accuracy can be further improved. In the first modification, the ACM sensor 11A can determine the corrosion of the refrigerant pipe 6 directly. In addition, it is possible to reduce the number of components, and to achieve space saving.

Explained in the first modification is an example in which a part of the bent portion 7 of the refrigerant pipe 6 is used as the base material 13 of the ACM sensor 11A, but the present disclosure is not limited thereto. Any part other than the bent portion 7 of the refrigerant pipe 6 may be used as the base material 13. For example, a linearly extending part of the refrigerant pipe 6 may also be used as the base material 13.

### (Third embodiment)

A refrigeration cycle device according to a third embodiment of the present disclosure will now be explained. In the third embodiment, difference with respect to the first embodiment will be mainly explained. In the third embodiment, the same or equivalent elements as those according to the first embodiment will be explained by assigning the same reference numerals thereto. In the third embodiment, descriptions that are redundant with those in the first embodiment will be omitted.

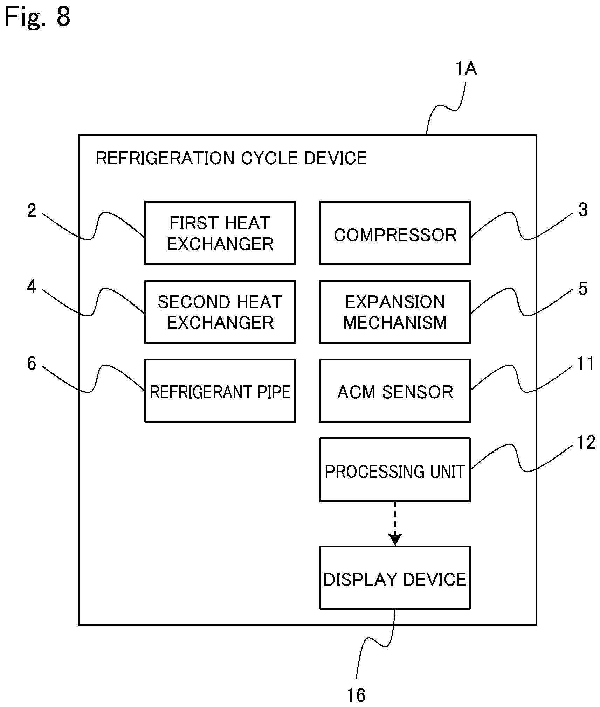

FIG. 8 is a block diagram of the refrigeration cycle device 1A according to the third embodiment of the present disclosure.

The third embodiment is different from the first embodiment in that the refrigeration cycle device 1A includes a display device 16.

In the third embodiment, the refrigeration cycle device 1A is the same as the refrigeration cycle device 1 according to the first embodiment, unless otherwise specified.

The display device 16 displays the determination result of the corrosion of the refrigerant pipe 6, determined by the processing unit 12. The determination result of the corrosion is, for example, the presence or absence of any corrosion. The display device 16 includes an LED, and a control circuit that controls the LED. The control circuit turns on the LED by receiving a signal from the processing unit 12. For example, when it is determined that there is a corrosion, the processing unit 12 transmits a signal to the control circuit in the display device 16. Upon receiving the signal from the processing unit 12, the control circuit then turns on the LED. The LED is disposed at a position visually recognizable by a user of the refrigeration cycle device 1A. For example, the LED is disposed outside of the indoor unit 9.

### [Advantageous effects]

The display device 16 displays the determination result of the corrosion of the refrigerant pipe 6, determined by the processing unit 12.

With such a configuration, it is possible to display the determination result of corrosion of the refrigerant pipe 6 to the user of the refrigeration cycle device 1A. Therefore, by informing and prompting the user that the refrigerant pipe 6 needs to be replaced or repaired, it is possible to take care of the refrigerant pipe 6 before the refrigerant pipe 6 becomes penetrated.

Explained in the third embodiment is an example in which the refrigeration cycle device 1A includes the display device 16, but the present disclosure is not limited thereto. It is also possible for the display device 16 not to be included as a component of the refrigeration cycle device 1A. The display device 16 may be a display that is independent from the refrigeration cycle device 1A. When the display device 16 is independent from the refrigeration cycle device 1A, the refrigeration cycle device 1A and the display device 16 may include communicators. The communicator includes a circuit communicating with the display device 16 in accordance with a predetermined communication protocol (e.g., LAN, Wi-Fi (registered trademark), and Bluetooth (registered trademark)). It is also possible for a display on a remote controller of the refrigeration cycle device 1A to function as the display device 16, for example. The refrigeration cycle device 1A causes the communicator to transmit the information of a corrosion determination result to the remote controller. The remote controller may then cause the communicator to receive the information of the corrosion determination result, and display the corrosion determination result on the display of the remote controller. It is also possible to cause a display of the smartphone to function as the display device 16. Specifically, the communicator in the refrigeration cycle device 1A may communicate with the smartphone so as to display the corrosion determination result on the smartphone. For example, an application corresponding to the refrigeration cycle device 1A may be provided to the smartphone, and the smartphone may display the corrosion determination result, via the application.

Explained in the third embodiment is an example in which the LED of the display device 16 is turned on depending on the presence or absence of the corrosion, but the present disclosure is not limited thereto. The display device 16 may also display information related to the spike signal determined by the processing unit 12, together with or instead of the presence or absence of the corrosion. For example, when the display device 16 includes a display, the display device 16 may display the presence or absence of, the maximum current of, the number or the frequency of the occurrences of the spike signal, as a numerical value.

In addition, the display device 16 may display the progress of corrosion in three levels. For example, the display device 16 includes three LEDs of green, yellow, and red. The green LED is kept on before any corrosion occurs. The yellow LED is then turned on immediately after corrosion has occurred, and the red LED is turned on when one month has elapsed from when the corrosion has occurred.

Furthermore, the display device 16 is not limited to a visual display, and may be a speaker that emits a warning sound. For example, the display device 16 may emit a warning sound when the processing unit 12 determines that corrosion has occurred.

Explained in the third embodiment is an example in which the display device 16 is provided to the first embodiment, but the present disclosure is not limited thereto. It is also possible to provide the display device 16 to the second embodiment and the first modification.

### (Fourth embodiment)

A refrigeration cycle system 41 according to a fourth embodiment of the present disclosure will now be explained. In the fourth embodiment, difference with respect to the first embodiment will be mainly explained. In the fourth embodiment, the same or equivalent elements as those according to the first embodiment will be explained by assigning the same reference numerals thereto. In the fourth embodiment, descriptions that are redundant with those in the first embodiment will be omitted.

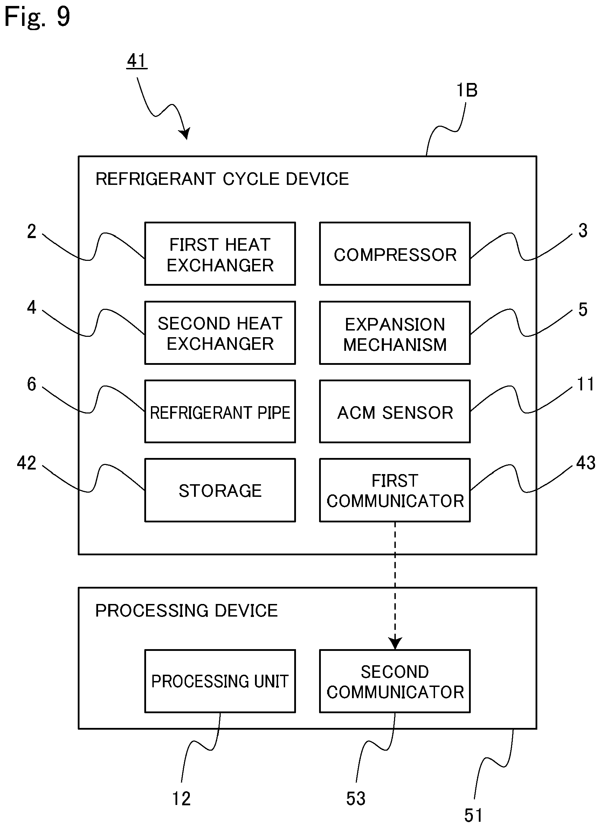

FIG. 9 is a block diagram of a refrigeration cycle system 41 according to the fourth embodiment of the present disclosure.

The fourth embodiment is different from the first embodiment in that a refrigeration cycle device 1B is included in the refrigeration cycle system 41.

In the fourth embodiment, the refrigeration cycle device 1B is the same as the refrigeration cycle device 1 according to the first embodiment, unless otherwise specified.

### [Overall configuration]

As illustrated in FIG. 9, the refrigeration cycle system 41 includes the refrigeration cycle device 1B and a processing device 51.

### <Refrigeration cycle device>

The refrigeration cycle device 1B includes the first heat exchanger 2, the compressor 3, the second heat exchanger 4, the expansion mechanism 5, the refrigerant pipe 6, the ACM sensor 11, a storage 42, and a first communicator 43.

### <Storage>

The storage 42 stores therein information of a corrosion current detected by the ACM sensor 11. The storage 42 may be, for example, a RAM, a ROM, an EEPROM, a flash memory or other memory technology, a CD-ROM, a DVD or other optical disc storage, a magnetic cassette, a magnetic tape, a magnetic disk storage or any other magnetic storage device.

### <First communicator>

The first communicator 43 transmits the information stored in the storage 42 over the network. Specifically, the first communicator 43 transmits information of the corrosion current to the processing device 51 over the network. The first communicator 43 includes a circuit that performs transmission to the second communicator 53 included in the processing device 51, which will be described later, in accordance with a predetermined communication protocol (e.g., LAN, Wi-Fi (registered trademark), and Bluetooth (registered trademark)).

### <Processing device>

The processing device 51 includes the processing unit 12 and the second communicator 53. The processing device 51 is a computer. The processing device 51 is a server or a cloud, for example.

### <Second communicator>

The second communicator 53 receives the information of the corrosion current transmitted from the first communicator 43 over the network. The second communicator 53 includes a circuit that performs receiving from the first communicator 43 in the refrigeration cycle device 1B, in accordance with a predetermined communication standard (e.g., LAN, Wi-Fi (registered trademark), and Bluetooth (registered trademark)).

The processing unit 12 determines the corrosion based on the information of the corrosion current received by the second communicator 53.

### [Operation]

In the refrigeration cycle device 1B, the ACM sensor 11 detects a corrosion current, and information of the corrosion current is stored in the storage 42. The first communicator 43 transmits the information of the corrosion current stored in the storage 42 to the second communicator 53. In the processing device 51, the information of the corrosion current is received by the second communicator 53. The processing unit 12 then determines the corrosion of the refrigerant pipe 6 in the refrigeration cycle device 1B based on the information of the corrosion current received by the second communicator 53.

### [Advantageous effects]

The refrigeration cycle system 41 according to one aspect of the present disclosure includes the refrigeration cycle device 1B and the processing device 51. The refrigeration cycle device 1B includes the first heat exchanger 2, the compressor 3, the second heat exchanger 4, and the expansion mechanism 5. The processing device 51 communicates with the refrigeration cycle device 1B over a network. The refrigeration cycle device 1B further includes the refrigerant pipe 6, the atmospheric corrosion monitor (ACM) sensor 11, the storage 42, and the first communicator 43. The refrigerant pipe 6 connects the first heat exchanger 2, the compressor 3, the second heat exchanger 4, and the expansion mechanism 5, is configured to circulate the refrigerant, and contains copper as a main component. The ACM sensor 11 is disposed at least one of on the outer surface of the refrigerant pipe 6 and around the refrigerant pipe 6, and detects the corrosion current. The storage 42 stores therein information of a corrosion current detected by the ACM sensor 11. The first communicator 43 transmits the information of the corrosion current stored in the storage 42 over the network. The processing device 51 includes the second communicator 53 and the processing unit 12. The second communicator 53 receives the information of the corrosion current over the network. The processing unit 12 determines corrosion of the refrigerant pipe 6 based on a change in the corrosion current.

With such a configuration, it is possible to improve the detection accuracy of corrosion of the refrigeration cycle device 1B, and to transmit the information of the corrosion current detected by the ACM sensor 11 from the refrigeration cycle device 1B to another device. Specifically, the information of the corrosion current detected by the ACM sensor 11 can be transmitted to the processing device 51 that is independent from the refrigeration cycle device 1B. For example, when a seller has the processing device 51, a maintenance service can be provided based on the corrosion determined by the processing unit 12. Therefore, it is possible to suppress a failure in the refrigeration cycle device 1B, to improve efficiency of maintenance service and to improve user satisfaction.

Note that the processing device 51 may receive the information from the plurality of refrigeration cycle devices 1B.

Although the present disclosure has been fully described in connection with the preferred embodiments thereof with reference to the accompanying drawings, it is to be noted that various changes and modifications are apparent to those skilled in the art. Such changes and modifications are to be understood as included within the scope of the present disclosure as defined by the appended claims unless they depart therefrom.

### INDUSTRIAL APPLICABILITY

The refrigeration cycle device and the refrigeration cycle system according to the present disclosure are useful as an air conditioner, because the refrigeration cycle device and the refrigeration cycle system can improve the detection accuracy of corrosion of a refrigerant pipe containing copper as a main component.

### Reference Numerals

- 1, 1A, 1B: refrigeration cycle device
- 2: first heat exchanger
- 3: compressor
- 4: second heat exchanger
- 5: expansion mechanism
- 6: refrigerant pipe
- 7: bent portion
- 8: four-way valve
- 9: indoor unit
- 10: outdoor unit
- 11, 11A: ACM sensor
- 12: processing unit
- 13: base material
- 14: insulating layer
- 15: cathode electrode
- 16: display device
- 17: fins
- 19: water film
- 20: conductive wire
- 21: insulating protection layer
- 41: refrigeration cycle system
- 42: storage
- 43: first communicator
- 51: processing device
- 53: second communicator

## Claims

1. A refrigeration cycle device including a first heat exchanger, a compressor, a second heat exchanger, and an expansion mechanism, the refrigeration cycle device comprising:
a refrigerant pipe that connects the first heat exchanger, the compressor, the second heat exchanger, and the expansion mechanism, and through which a refrigerant is circulated, and that contains copper as a main component;
an atmospheric corrosion monitor (ACM) sensor that is disposed on at least one of an outer surface of the refrigerant pipe and around the refrigerant pipe, and that detects a corrosion current; and
a processing unit that determines corrosion of the refrigerant pipe based on a change in the corrosion current detected by the ACM sensor.

2. The refrigeration cycle device according to claim 1, wherein the ACM sensor is disposed on the refrigerant pipe installed in at least one of the first heat exchanger and the second heat exchanger.

3. The refrigeration cycle device according to claim 2, wherein
the refrigerant pipe disposed in at least one of the first heat exchanger and the second heat exchanger has a bent portion, and
the ACM sensor is disposed on the bent portion.

4. The refrigeration cycle device according to any one of claims 1 to 3, wherein
the ACM sensor includes
a base material that is conductive,
an insulating layer that is laminated on the base material and that is made of an electrically insulating material, and
a cathode electrode that is laminated on the insulating layer and that has a surface potential nobler than a surface potential of the base material, and
a main component of the base material and the main component of the refrigerant pipe are the same.

5. The refrigeration cycle device according to claim 4, wherein the base material and the refrigerant pipe have substantially a same thickness.

6. The refrigeration cycle device according to claim 4 or 5, wherein a part of the refrigerant pipe is used as the base material.

7. The refrigeration cycle device according to any one of claims 1 to 6, further comprising a display device that displays a determination result of corrosion of the refrigerant pipe, the corrosion having been determined by the processing unit.

8. The refrigeration cycle device according to any one of claims 1 to 7, wherein
the processing unit is configured
to detect
a rise interval in which a time derivative of the corrosion current rises at a threshold or higher, and
a fall interval in which the corrosion current falls, the fall interval immediately following the rise interval, and
to determine the corrosion of the refrigerant pipe when the rise interval is shorter than 1 second and the fall interval is 1 second or longer, and is shorter than 30 seconds.

9. The refrigeration cycle device according to claim 8, wherein the threshold is 5 µA/s.

10. The refrigeration cycle device according to any one of claims 1 to 9, further comprising a four-way valve that changes a direction in which the refrigerant flows in the refrigerant pipe.

11. A refrigeration cycle system comprising:
a refrigeration cycle device that includes a first heat exchanger, a compressor, a second heat exchanger, and an expansion mechanism;
a processing device that communicates with the refrigeration cycle device via a network,
wherein
the refrigeration cycle device includes
a refrigerant pipe that connects the first heat exchanger, the compressor, the second heat exchanger, and the expansion mechanism, through which a refrigerant is circulated, and that contains copper as a main component,
an atmospheric corrosion monitor (ACM) sensor that is disposed on at least one of an outer surface of the refrigerant pipe and around the refrigerant pipe, and that detects a corrosion current,
a storage that stores therein information of the corrosion current detected by the ACM sensor, and
a first communicator that is configured to transmit information of the corrosion current stored in the storage via the network, and
the processing device includes
a second communicator configured to receive the information of the corrosion current via the network, and
a processing unit that determines corrosion of the refrigerant pipe based on a change in the corrosion current.
